# EUROPEAN PATENT SPECIFICATION

(11) **EP 3 400 999 B1**
(45) Date of publication and mention of the grant of the patent: **24.08.2022**
(21) Application number: 16883604.7
(22) Date of filing: 07.01.2016
(51) Int. Cl.: B01D 39/20, B01D 46/00, B01D 53/92, B01J 35/04, F01N 3/035, B01D 46/24, B01D 53/94

(54) **FILTER**
FILTER
FILTRE

(43) Date of publication of application: 14.11.2018
(73) Proprietor: Johnson Matthey Japan G.K., Sakura-shi, Tochigi 329-1412 (JP)
(72) Inventor: SUMIYA, Satoshi, Sakura-shi Tochigi 329-1412 (JP)
(74) Representative: Nunn, Andrew Dominic
(86) International application number: PCT/JP2016/050353
(87) International publication number: WO 2017/119101

(56) References cited:
- EP-A1- 3 162 428
- WO-A1-2012/046484
- WO-A1-2014/068321
- JP-A- 2009 106 926
- JP-A- 2010 264 359
- JP-A- 2013 510 702
- JP-A- 2014 069 183
- JP-A- 2014 094 360
- JP-A- 2015 077 532

## Description

### [Technical Field]

The present invention relates to a filter.

### [Technical Background]

A filter of the type in which end portions of cells forming gas flow paths are alternately closed off and gas passes through partition walls in the cells has been proposed in the prior art as a filter forming part of an exhaust gas purification system (wall-flow filter). A filter of this type has a structure in which gas flowing into the filter from the engine side is made to forcibly pass through voids in the partition walls. Examples are disclosed in JP2014-69183A.

Meanwhile, there are also filters of the type in which the end portions of the cells are not completely closed off alternately and by necessity the total amount of gas does not pass through the partition walls. A filter of this type has a relatively low PM (particulate matter including graphite, etc.) trapping efficiency in comparison with the abovementioned wall-flow filter, but because it has a structure that does not readily become completely clogged, there is an advantage in that forced regeneration control is unnecessary as a matter of course.

### [Summary of the Invention]

The inventors of the present invention found that there is a reduction in the amount of PM which can be trapped inside the cell in the case of an on-wall catalyst coating method in which the surfaces of partition walls of filter cells are charged with a catalytic substance in a wall-flow type filter in which the end portions of the cells are alternately closed off, so there is a problem in terms of a reduced PM trapping efficiency. Meanwhile, it was found that the porosity of the partition walls decreases if there is an excessive amount of coating in the case of an in-wall type filter when the catalytic substance is simply coated on the inside of the porous partition walls, so there is a reduction in PM trapping efficiency and further, there is also a reduction in PM oxidation efficiency afforded by the catalyst.

The present invention has been devised against this background, and the objective thereof is to provide a filter which does not suffer any loss in terms of performance relating to PM trapping efficiency, and which can also ensure high treatment efficiency afforded by the catalyst.

The present invention, as defined in claim 1, provides a filter comprising a substrate and a catalytic substance provided within the substrate, wherein the substrate comprises a plurality of cells forming gas flow paths and having a gas inflow-side end portion and an outflow-side end portion, and a plurality of porous partition walls defining the cells, the end portions of at least some of the cells being closed off, and the void occupancy of the catalytic substance within the pores of the partition walls is 10% or less.

According to one aspect of the present invention, the abovementioned filter is such that the catalytic substance has a mean particle size D50 of 1/10 or less of the mean pore size D50 of the pores in the partition walls.

According to the present invention, the abovementioned filter is such that the catalytic substance is included in a range of between 10% and 50% of the total length of the partition walls in the lengthwise direction, from the gas inflow-side end portion.

According to the present invention, when Pt and Pd are used as the catalytic substance, the abovementioned filter comprises said materials in a ratio of between 1:1 and 10:1.

According to one aspect of the present invention, the abovementioned filter further includes at least one material selected from the group consisting of oxygen storage materials, alkali metals, and perovskite materials.

According to one aspect of the present invention, the abovementioned filter is such that only one of the gas inflow-side end portion and outflow-side end portion is partially closed off.

According to one aspect of the present invention, the abovementioned filter is such that the porosity of the substrate is between 40% and 70%.

According to one aspect of the present invention, the abovementioned filter is such that the void occupancy of the catalytic substance is less than 5%.

The present invention makes it possible to provide a filter which does not suffer any loss in terms of performance relating to PM trapping efficiency, and which can also ensure high treatment efficiency afforded by the catalyst.

### [Brief Description of the Drawings]

[Figure 1] A schematic diagram to explain the filter according to one embodiment.
[Figure 2] An image of the filter as observed under an electron microscope.
[Figure 3] A graph showing the correlation of void occupancy obtained from a SEM image and void occupancy obtained from measurement results using a mercury porosimeter.
[Figure 4] A graph showing the relationship between catalyst particle size and pressure loss.
[Figure 5] A graph showing the relationship between PM trapping efficiency and pore filling ratio in a catalyst-supported CSF.
[Figure 6] A graph showing the relationship between the rate of pressure loss increase and pore filling ratio in a catalyst-supported CSF.
[Figure 7] A graph showing the relationship between Pt/Pd ratio and combustion temperature.

### [Modes for Carrying Out the Invention]

An embodiment of the present invention will be explained below using the drawings, but it is self-evident that the present invention is not limited by this embodiment.

### [Filter]

The filter according to this embodiment comprises a substrate 1 and a catalytic substance 2 provided within the substrate 1, characterized in that the substrate 1 comprises a plurality of cells 4 forming gas flow paths and having a gas inflow-side portion 2 and outflow-side portion 3, and a plurality of porous partition walls 5 defining the cells 4, the end portions of at least some of the cells 4 being closed off, and the void occupancy of the catalytic substance (not depicted) within the pores of the partition walls (not depicted) is 10% or less.

The filter according to this embodiment does not suffer any loss in terms of performance relating to PM trapping efficiency, and can also ensure high treatment efficiency afforded by the catalyst.

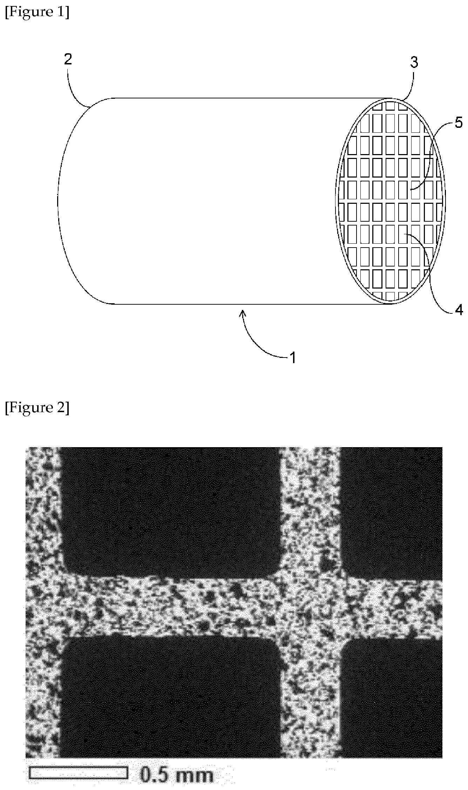

As illustrated in Figure 1, the filter according to this embodiment comprises the substrate 1 and the catalytic substance provided within the substrate. The substrate 1 supports the catalytic substance and is preferably durable, without reducing the combustion efficiency of a connected engine.

There are no particular limitations as to the material constituting the substrate 1, so long as pores are provided at least in the partition walls 5, but when the filter is used as, for example, an exhaust gas purification filter, a porous ceramic material is preferably used.

As materials for the substrate 1, cordierite ceramics comprising three components, aluminum oxide (Al₂O₃: alumina), silicon dioxide (SiO₂: silica), and magnesium oxide (MgO); silicon carbide, and aluminum titanate, etc. are preferred. By using these materials with an organic pore-forming material, it is possible to set the porosity of the pores in the partition walls 5, etc. in the substrate 1 to a preferred range.

A honeycomb-shape comprising these materials is preferred as the substrate 1. A honeycomb filter comprises a plurality of cells forming gas flow paths, but there are no particular limitations as to the cross-sectional shape of the cells and, for example, a "chessboard" grid such as that illustrated in Figure 1 may be used or hexagonal shapes may be used, and there are no particular constraints on the shape thereof. Alternatively, what is known as an asymmetric cell structure having different cell sizes at the inlet and the outlet may be used.

There are no limitations as to the structure of the substrate 1 in the filter according to this embodiment, but the substrate 1 comprises at least the gas inflow-side end portion 2 and outflow-side end portion 3. Further, the substrate 1 comprises at least the plurality of cells 4 that form gas flow paths and the plurality of porous partition walls 5 that define the cells 4.

In the filter according to this embodiment, the end portions of at least some of the plurality of cells 4 are closed off. Due to such a structure, gas flowing in from the gas inflow-side end portion 2 flows out of the gas outflow-side end portion 3, with some of the gas moving through the cells 4 without passing through the partition walls and some of the gas passing through the pores in the partition walls 5.

There are no limitations as to the proportion of closed-off cells, nor are there any limitations as to the arrangement of the closed off cells. The filter according to this embodiment more preferably employs a substrate having a configuration such as that described above, but there are no limitations as to the configuration of the substrate supporting the catalytic substance.

The catalytic substance is supported and held on the surface of the substrate 1 and the catalytic substance comprises an active metal, an active metal support, a catalyst auxiliary, etc.

The active metal works as a catalyst active component in an oxidation catalyst. Noble metals platinum (Pt) and palladium (Pd) and a base metal are included as active metals, but a mixture of platinum, palladium, and gold is more preferable.

Specific examples of base metals include copper (Cu), iron (Fe), cobalt (Co), zinc (Zn), potassium (K), cesium (Cs), silver (Ag) and so-called oxygen storage materials comprising a rare earth metal and perovskite compounds comprising Fe, Mn, Y, Ce, La, etc. Among these, alkali metals, oxygen storage materials, and iron are more preferred. Further, one of these base metals or a mixture of two or more may be used.

In the filter according to this embodiment, the void occupancy of the catalytic substance occupying the pores in the plurality of porous partition walls is 10% or less. By configuring thusly, a balance between reduced pressure loss and carbon substance trapping efficiency can be achieved. More preferably, 5% or less of the catalytic substance is present within the pores of the partition walls.

Due to the catalytic substance being present within the pores of the partition walls 5 at a void occupancy of 10% or less, it is possible to restrict resistance to the passage of gas flowing in the cells 4 while achieving a balance with ensuring the trapping capacity of the PM component.

The form of the pores and the void occupancy of the catalytic substance may be obtained by using a scanning electron microscope (SEM)/electron probe micro-analyzer (EPMA). For example, by means of SEM/EPMA, it is possible to obtain the pore area (A) of the substrate before application of the catalytic substance in a field of view between 150 times and 500 times by means of image processing (illustrated in Figure 2). Further, the pore area (B) after catalyst application can also be obtained by the same method. Moreover, the area of the substrate portion is obtained by means of image processing using the same two-dimensional method, whereby the relative proportion of the pore area of the substrate 1 and the area occupancy can be calculated.

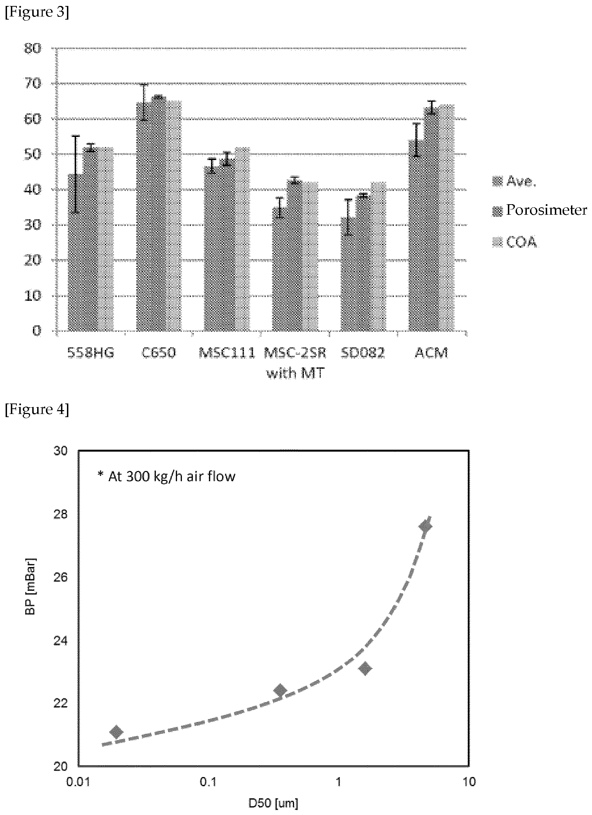

Further, a mercury intrusion method is generally used as a method for three-dimensional pore structure volume measurement and the correlation between that method and the abovementioned image method provides results such as those illustrated in Figure 3; there is a correlation between the two-dimensional void occupancy (proportion of occupied area) obtained from a SEM image and the void occupancy volume obtained from mercury porosimeter measurement results, which are three-dimensional information.

Here, according to the SEM image method, an EPM method with a magnification of 150-200 times is preferably used, e.g., it is possible to obtain the occupied area by separating the substrate and the area occupied by the catalyst according to color using an RGB method. In the filter according to this embodiment, when the occupied area is obtained by image processing, the image is binarized and the calculation is made using an automatic mode or the like in order to prevent human error.

In the filter according to this embodiment, the mean particle size D50 of the catalytic substance is preferably 1/10 or less of the mean pore size D50 of the pores in the partition walls 5.

The mean particle size D50 of the catalytic substance can be specifically measured by laser diffraction or the like. The mean pore size D50 of the partition walls 5 can be measured specifically by mercury porosimetry. For example, if the mean pore size D50 of the pores in the partition walls 5 is 10 µm, then the mean particle size D50 of the catalytic substance is preferably 0.5 µm or less.

Here, the "mean particle size D50" means the size of particles (median size) corresponding to a median value (50%) in the grain size distribution of the particles.

The mean pore size D50 of the pores in the partition walls 5 is preferably between 8 µm and 20 µm, and 10 µm or greater is more preferable from the point of view of there being a high initial level of trapping efficiency for carbon substances. The mean particle size D50 of the catalytic substance is preferably 1/10 or less of the mean pore size of the partition walls, but a mean particle size of 20 nm or greater is preferred for reasons such as stability of the dispersed state of solid material in a catalyst slurry.

Further, if particles larger than this are used, it tends to be difficult for the catalytic substance to reach the pores in the walls, and if the catalytic substance is deposited on the walls on the catalyst slurry supply-side in particular (on-wall), this is likely to cause a reduction in PM trapping efficiency and trapping capacity.

In the filter according to this embodiment, the amount of catalytic substance may have a gradient in the lengthwise direction of the substrate, and the void occupancy of the catalyst is 10% or less. By setting this configuration, it is possible to increase the efficiency contributed to exhaust gas purification by the catalyst.

The amount of catalytic substance means, in other words, the concentration of active metal such as Pt or Pd acting as a catalyst. That is, the concentration of active metal may have a gradient in the lengthwise direction of the substrate and the concentration ratio of active metal at the gas inflow-side end portion and outflow-side end portion may be configured between 10/90 and 90/10.

If the inflow side is at a high concentration, this makes it possible for the noble metal on the filter to contribute to exhaust gas purification, while it is effective for the outflow side to be at a high concentration if NO₂ or the like is to be supplied downstream, for example.

If the filter according to this embodiment has the substrate configuration described above, it is possible to restrict a reduction in PM trapping efficiency and efficiency of the treatment afforded by the catalyst in a state in which the catalyst is locally present at the inflow-side end portion 2 and outflow-side end portion 3.

In the filter according to this embodiment, the catalytic substance is included in a range of between 10% and 50% of the total length of the partition walls in the lengthwise direction, from the gas inflow-side end portion. By setting the range of application of the catalytic substance to a range between 10% and 50% of the total length of the partition walls in the lengthwise direction, it is possible to achieve an effect of enabling particularly high NOx purification performance. In this case, the range of application of the catalytic substance is preferably started from the gas inflow-side end portion, but the catalytic substance is preferably not provided at the gas outflow side.

In the filter according to this embodiment, Pt and Pd are included in a ratio of between 1:1 and 10:1 as the catalytic substance. By setting this configuration, an effect enabling suppression of thermal sintering (aggregation) of the noble metal is obtained. Pt and Pd are more preferably included in a ratio of between 2:1 and 5:1.

Further, even if only a PM combustion catalyst comprising a transition metal group is used in conjunction with a noble metal, only the PM combustion catalyst comprising a transition metal group may be applied, or the two may be mixed for use.

In the filter according to this embodiment, at least one material selected from the group consisting of oxygen storage materials, alkali metals, and perovskite materials is preferably further included as a catalyst auxiliary. By further including such a PM combustion catalyst comprising a transition metal group, an effect of promoting combustion of carbon substances is obtained.

Examples of oxygen storage materials include materials comprising Ce, Pr, Zr, and Nd. Among these, Ce is particularly preferably used for the reason of promoting combustion.

Examples of alkali metals include K, Cs, and Mg. Among these, K and Cs are particularly preferably used for the reason of promoting combustion.

Examples of perovskite materials include Bi₄Ti₃O₄ (JP 2010-69471 A) and Ce_{0.5}B_{0.1}Pr_{0.4} (JP 2009-112907 A), among others.

Among the oxygen storage materials, alkali metals and perovskite materials, the oxygen storage materials are most preferred.

In the filter according to this embodiment, only one of the gas inflow-side end portion and outflow-side end portion is preferably partially closed off. By setting this configuration, an effect of making the filter less likely to become clogged on the actual market is achieved.

In the filter according to this embodiment, the porosity of the substrate 1 is preferably between 40% and 70%. By setting this configuration, an effect of a balance between reduced pressure loss and carbon material trapping capacity is achieved. The porosity of the substrate 1 is more preferably between 45% and 65% from the point of view of a balance between pressure loss and PM trapping performance.

In the filter according to this embodiment, the void occupancy of the catalytic substance in the pores of the partition walls 5 according to image processing is less than 10%. Due to such a configuration, an effect whereby it is possible to restrict a reduction in PM trapping efficiency and increased pressure loss is obtained. The void occupancy of the catalytic substance in the pores of the partition walls 5 is more preferably less than 5%.

The filter according to this embodiment is used for exhaust gas purification, and a device employing the filter according to this embodiment is preferably used in an exhaust system of an internal combustion engine, in particular, a spark-ignition engine (e.g. a gasoline engine) or a compression-ignition engine (e.g. a diesel engine).

Furthermore, these engines may be engines which combust fuel while adjusting the air/fuel ratio, and specific preferred examples thereof which may be cited include lean-burn engines and direct-injection engines, and preferably engines combining same (i.e., direct-injection lean-burn engines). A direct-injection engine employs a fuel supply system which enables an increased compression ratio, an improvement in fuel efficiency and furthermore, a reduction in exhaust gas. It is therefore possible to envision a further improvement in combustion efficiency and a reduction in exhaust gas by combining a direct-injection engine with a lean-burn engine.

The filter according to this embodiment is preferably used in an exhaust system of an internal combustion engine mounted in a transportation vehicle or machine, etc. Specific examples of transportation vehicles and machines which may be cited include: transportation vehicles such as, for example, automobiles, buses, trucks, dump trucks, railcars, motorcycles, cycles equipped with an engine, watercraft, tankers, motorboats, and aircraft; agricultural machines such as cultivators, tractors, combine harvesters, chainsaws, and forestry machines; marine fishery machines such as fishing boats; civil engineering machines such as tanker trucks, cranes, compressors, and excavators; power generators; and similar machines.

When the filter according to this embodiment is installed in a vehicle exhaust system, for example, it may be provided in a start catalyst, an underfloor system, or a manifold converter.

### [Examples]

Examples in accordance with the present invention will be described below. The content of the present invention should not be interpreted as being limited by these examples.

### [Example 1]

A diesel particulate filter (DPF) substrate (diameter 143.8 mm, length 152.4 mm) was coated with 11 g/L of a slurry comprising alumina particles having a mean particle size (D50) of 0.02 µm, 0.5 µm, 2.1 µm, or 4.5 µm and after drying, was fired at 500°C to produce a catalyzed DPF. The pressure loss (BP) under a 300 kg/h air stream was measured for the catalyst-supported DPF.

Figure 4 is a graph showing the relationship between catalyst particle size (D50) and pressure loss (BP) with respect to a DPF in which the mean pore size of the substrate is 10 µm. It is clear from this graph that when the mean pore size of the DPF is 10 µm, the mean particle size is preferably approximately 0.5 µm or less.

### [Example 2]

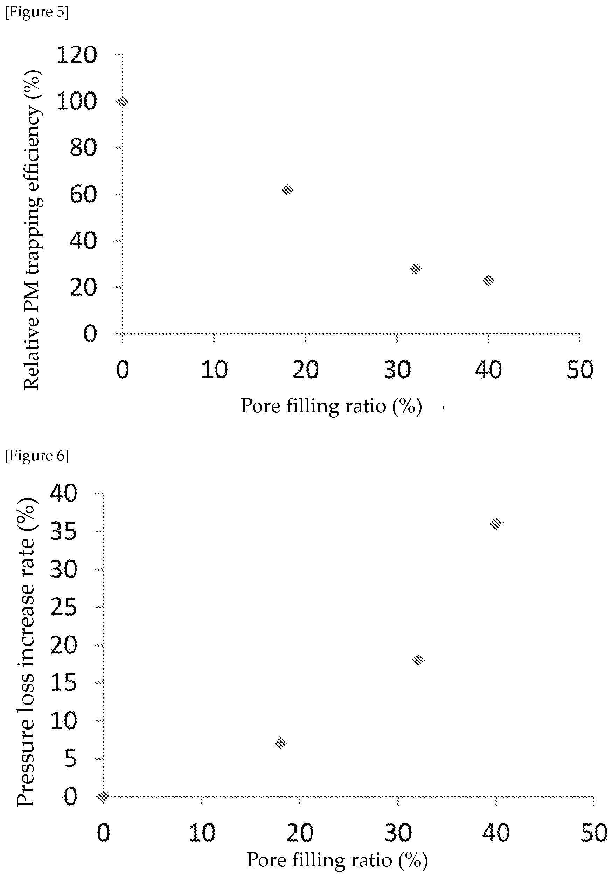

Three types of catalyst-supported catalyzed soot filters (CSF) in which the amount of the catalyst was 11 g/L, 25 g/L, and 45 g/L were prepared using alumina particles having a mean particle size of 0.02 µm.The filling ratios of the pores of the catalyst-supported CSFs were determined by means of an image processing method and the PM trapping efficiency was measured using a PM generator. The results are shown in Figure 5. It is clear from the results in Figure 5 that the PM trapping efficiency decreases as the pore filling ratio increases.

### [Example 3]

Pressure loss measurements were carried out using the catalyst-supported CSFs prepared in Example 2. The results are shown in Figure 6. It is understood from results in Figure 6 that the pressure loss increases as the as the pore filling ratio increases. It is therefore preferred from the point of view of PM combustion that the catalyst be present, but it is clear that the filling ratio of the filter substrate is preferably lower from the results of Examples 2 and 3.

### [Example 4]

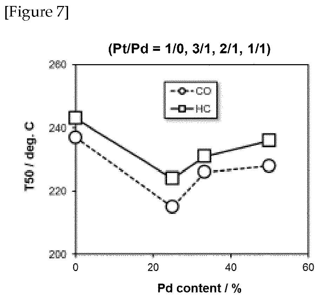

Figure 7 is a graph showing the relationship between Pt/Pd ratio and combustion temperature. The points in the graph in Figure 7 show cases of Pt/Pd = 1/0, 3/1, 2/1, and 1/1. It is understood from the results in Figure 7 that the Pd ratio is preferably higher in order to cause the PFF to contribute to emission reduction and it is clear that the proportion of Pt is preferably higher in order to cause the PFF to contribute to PM combustion.

## Claims

1. A filter comprising a base material and a catalytic substance comprising Pt and Pd in a ratio of between 1:1 and 10:1 as the catalytic substance provided within the base material,
wherein the base material comprises a plurality of cells forming gas flow paths and having a gas inflow-side end portion and outflow-side end portion, and a plurality of porous partition walls defining said cells, the end portions of at least some of the cells being closed off, and
the partition wall void occupied by the catalytic substance within the pores of the partition walls is 10% or less, wherein the catalytic substance is included in a range of between 10% and 50% of the total length of the partition walls in the lengthwise direction, from the gas inflow-side end portion.

2. The filter as claimed in claim 1, wherein the catalytic substance has a mean particle size D50 of 1/10 or less of the mean pore size D50 of the pores in the partition walls.

3. The filter as claimed in claim 1 or 2, further including at least one material selected from the group consisting of oxygen storage materials, alkali metals and perovskite materials.

4. The filter as claimed in any one of claims 1 to 3, wherein only one of the gas inflow-side end portion and outflow-side end portion is partially closed off.

5. The filter as claimed in any one of claims 1 to 4, wherein the porosity of the base material is between 40% and 70%.

6. The filter as claimed in any one of claims 1 to 5, wherein the partition wall void occupied by the catalytic substance is less than 5%.

7. The filter as claimed in claim 1, wherein an amount of catalytic substance is disposed in a gradient in the lengthwise direction of the base material.

8. The filter as claimed in claim 1, wherein a concentration of active metal is disposed in a gradient in the lengthwise direction of the base material.

9. The filter as claimed in any preceding claim, wherein a mean pore size of the pores in the partition wall is between 8µm and 20pm.

## Patentansprüche

1. Filter, umfassend ein Basismaterial und eine katalytische Substanz, umfassend Pt und Pd in einem Verhältnis zwischen 1:1 und 10:1, als katalytische Substanz, die innerhalb des Basismaterials bereitgestellt ist, wobei das Basismaterial eine Vielzahl von Zellen umfasst, die Gasströmungswege bilden und einen gaszuströmseitigen Endabschnitt und abströmseitigen Endabschnitt aufweisen, und eine Vielzahl von porösen Trennwänden, die Zellen definieren, wobei die Endabschnitte von mindestens einigen der Zellen geschlossen sind und der Trennwandhohlraum, der von der katalytischen Substanz in den Poren der Trennwände ausgefüllt ist, 10 % oder weniger beträgt, wobei die katalytische Substanz in einem Bereich zwischen 10 % und 50 % der Gesamtlänge der Trennwände in der Längsrichtung vom gaszuströmseitigen Endabschnitt eingeschlossen ist.

2. Filter nach Anspruch 1, wobei die katalytische Substanz eine mittlere Partikelgröße D50 von 1/10 oder weniger der mittleren Porengröße D50 der Poren in den Trennwänden aufweist.

3. Filter nach Anspruch 1 oder 2, ferner einschließend mindestens ein Material, das ausgewählt ist aus der Gruppe bestehend aus Sauerstoffspeichermaterialien, Alkalimetallen und Perowskitmaterialien.

4. Filter nach einem der Ansprüche 1 bis 3, wobei nur einer des gaszuströmseitigen Endabschnitts und des abströmseitigen Endabschnitts teilweise geschlossen ist.

5. Filter nach einem der Ansprüche 1 bis 4, wobei die Porosität des Basismaterials zwischen 40 % und 70 % liegt.

6. Filter nach einem der Ansprüche 1 bis 5, wobei der von der katalytischen Substanz ausgefüllte Trennwandhohlraum weniger als 5 % beträgt.

7. Filter nach Anspruch 1, wobei eine Menge an katalytischer Substanz in einem Gradienten in der Längsrichtung des Basismaterials angeordnet ist.

8. Filter nach Anspruch 1, wobei eine Konzentration des aktiven Metalls in einem Gradienten in der Längsrichtung des Basismaterials angeordnet ist.

9. Filter nach einem der vorstehenden Ansprüche, wobei eine mittlere Porengröße der Poren in der Trennwand zwischen 8 µm und 20 µm liegt.

## Revendications

1. Filtre comprenant un matériau de base et une substance catalytique comprenant du Pt et du Pd dans un rapport compris entre 1:1 et 10:1 en tant que substance catalytique fournie au sein du matériau de base, dans lequel le matériau de base comprend une pluralité de cellules formant des trajets d'écoulement de gaz et ayant une partie d'extrémité du côté de l'entrée de gaz et une partie d'extrémité du côté de la sortie, et une pluralité de parois de séparation poreuses définissant lesdites cellules, les parties d'extrémité d'au moins certaines des cellules étant fermées, et le vide des parois de séparation occupé par la substance catalytique au sein des pores des parois de séparation est de 10 % ou moins, dans lequel la substance catalytique est incluse dans une plage comprise entre 10 % et 50 % de la longueur totale des parois de séparation dans la direction longitudinale, à partir de la partie d'extrémité du côté de l'entrée de gaz.

2. Filtre selon la revendication 1, dans lequel la substance catalytique présente une taille moyenne de particules D50 de 1/10 ou moins de la taille moyenne de pores D50 des pores dans les parois de séparation.

3. Filtre selon la revendication 1 ou 2, incluant en outre au moins un matériau choisi dans le groupe constitué par des matériaux de stockage d'oxygène, des métaux alcalins et des matériaux de type pérovskite.

4. Filtre selon l'une quelconque des revendications 1 à 3, dans lequel une seule parmi la partie d'extrémité du côté de l'entrée de gaz et la partie d'extrémité du côté de la sortie est partiellement fermée.

5. Filtre selon l'une quelconque des revendications 1 à 4, dans lequel la porosité du matériau de base est comprise entre 40 % et 70 %.

6. Filtre selon l'une quelconque des revendications 1 à 5, dans lequel le vide des parois de séparation occupé par la substance catalytique est inférieur à 5 %.

7. Filtre selon la revendication 1, dans lequel une quantité de substance catalytique est disposée dans un gradient dans la direction longitudinale du matériau de base.

8. Filtre selon la revendication 1, dans lequel une concentration en métal actif est disposée dans un gradient dans la direction longitudinale du matériau de base.

9. Filtre selon l'une quelconque des revendications précédentes, dans lequel une taille de pore moyenne des pores dans la paroi de séparation est comprise entre 8 µm et 20 µm.
